# EUROPEAN PATENT SPECIFICATION

(11) **EP 2 837 857 B1**
(45) Date of publication and mention of the grant of the patent: **20.02.2019**
(21) Application number: 12873953.9
(22) Date of filing: 20.12.2012
(51) Int. Cl.: F16J 15/18, F16G 13/02, F16J 15/32, F16G 13/06, F16J 15/02

(54) **CHAIN**
KETTE
CHAINE

(30) Priority: 11.04.2012 JP 2012089946
(43) Date of publication of application: 18.02.2015
(73) Proprietor: NOK Corporation, Tokyo 105-8585 (JP)
(72) Inventor: ISHIGAKI Yoshiyuki, Aso-shi Kumamoto 869-2231 (JP)
(74) Representative: TBK
(86) International application number: PCT/JP2012/082995
(87) International publication number: WO 2013/153708

(56) References cited:
- JP-A- H0 754 932
- JP-A- 2003 090 390
- JP-A- 2004 183 695
- JP-A- 2011 163 388
- JP-U- 3 048 309
- JP-U- S5 543 128
- JP-U- S54 147 357
- JP-U- S63 126 640
- JP-U- S63 129 751

## Description

### BACKGROUND OF THE INVENTION

### Field of the Invention

The present invention relates to a seal ring according to a sealing technology, and more particularly to a chain comprising a seal ring. The chain according to the present invention is used, for example, in a motor cycle, and in the other industrial chains.

### Description of the Conventional Art

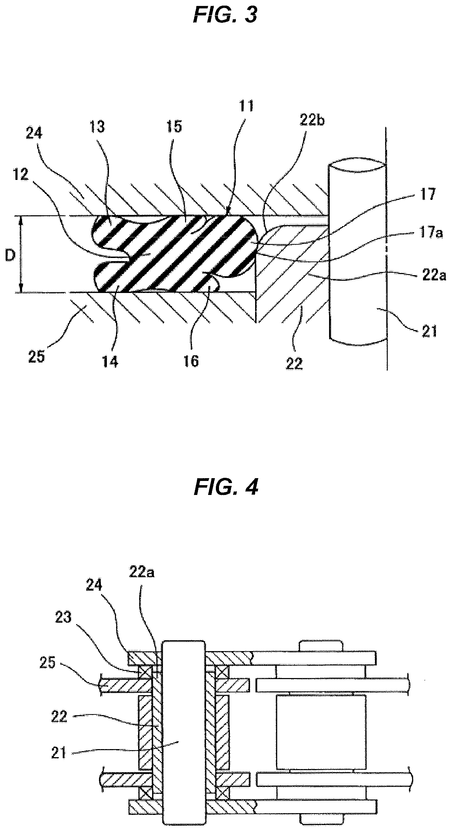

In an oilless chain, a seal ring 23 is installed so as to prevent grease (not shown) filled in a portion between a connection pin 21 and a bush 22 arranged in an outer peripheral side of the connection pin from leaking, as shown in Fig. 4. More specifically, the seal ring 23 is installed between an outer link plate 24 which is arranged in an outer peripheral side of the connection pin 21, and an inner link plate 25 which is arranged in an outer peripheral side of the connection pin 21 via the bush 22 in a state in which the seal ring 23 is compressed in an axial direction. An end portion 22a of the bush 22 protrudes out of the inner link plate 25 so as to extend toward the outer link plate 24, and the seal ring 23 is installed to an outer peripheral side of the end portion 22a of the bush 22.

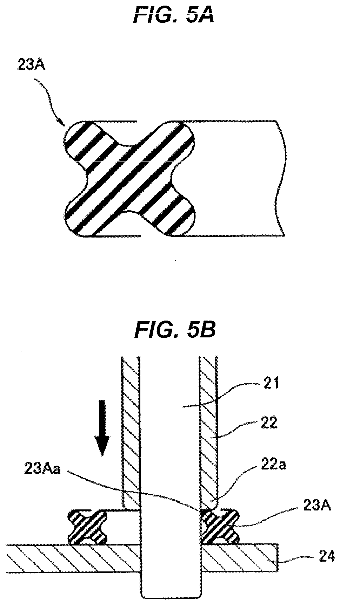

An X-ring 23A shown in Fig. 5A is used, for example, as the seal ring 23.

However, in the case that the X-ring 23A is used in the chain seal, there is a problem that torsion and biting are generated in the X-ring 23A when the X-ring is assembled in the chain.

In other words, assembling in the chain is achieved by a procedure that the X-ring 23A is installed to the outer peripheral side of the connection pin 21 to which the outer link plate 24 is fixed, and the bush 22 is next pressed into an inner peripheral side of the X-ring 23A, as shown in Fig. 5B. However, the end portion 22a of the bush 22 catches on an inner peripheral lip 23Aa of the X-ring at this time. As a result, the torsion and the biting of the inner peripheral lip 23Aa are generated in the X-ring 23A. Therefore, in the case that the X-ring 23A is used in the chain seal, the X-ring 23A is not good in its assembling property, and is used under an incomplete assembling state. Thus, there is a problem that a normal sealing function can not be achieved.

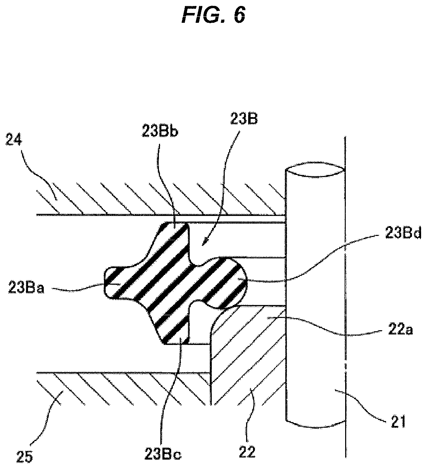

In response to the problem mentioned above, a seal ring having a ♀ character shape in its cross section has been proposed in JP 2006-349086 A and JP 6-48036 B, both disclosing a generic gasket according to the preamble of claim 1. More specifically, as shown in Fig. 6, a seal ring 23B integrally has an outer peripheral lip 23Ba which is provided so as to be directed to an outer side in a diametrical direction, a first end surface lip 23Bb which is provided so as to be directed to one side in an axial direction, a second end surface lip 23Bc which is provided so as to be directed to the other side in the axial direction, and an inner peripheral projection 23Bd which is provided so as to be directed to an inner side in the diametrical direction, and is formed into a ♀ character shape in its cross section.

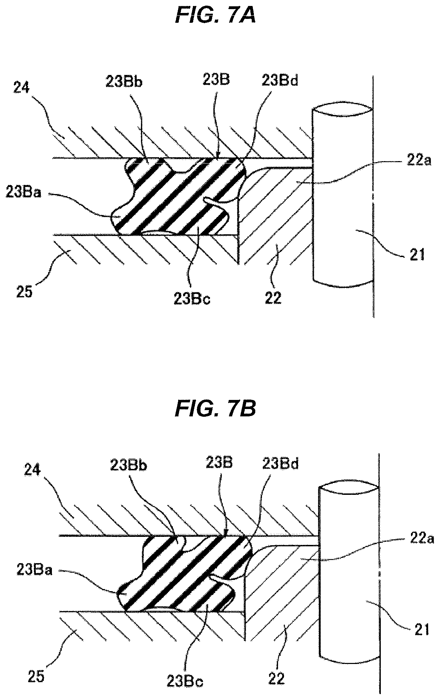

Further, in the seal ring 23B, rotation moment is generated in the seal ring 23B on the basis of contact of the inner peripheral projection 23Bd with the bush 22 when the bush 22 is pressed into the inner peripheral side of the seal ring 23B, as shown in Fig. 7A. As a result, the seal ring 23B is diagonally twisted, and is structured such that each of he lips 23Ba, 23Bb and 23Bc securely comes into contact with the outer link plate 24 or the inner link plate 25. Therefore, according to the structure, it is possible to suppress leakage of the grease, and it is possible to inhibit foreign matter such as muddy water and dust from entering into from an external portion.

However, in the case of the seal ring 23B having the ♀ character shaped cross section, the first end surface lip 23Bb coming into contact with the outer link plate 24 at the installing time is supposed to come down toward an outer side in a diametrical direction (a leftward direction in the drawing) as shown in Fig. 7A, but the first end surface lip 23Bb often comes down toward an inner side in the diametrical direction (a rightward direction in the drawing) as shown in Fig. 7B. In this case, the foreign matter such as the muddy water and the dust tends to enter into from the external portion and a sealing function is deteriorated. As a result, there is fear that a service life of the chain becomes short.

Further gaskets are known from JP S63 129751 U, JP S54 147357 U, JP S63 126640 U, JP S55 43128 U and JP H07 54932 A.

### SUMMARY OF THE INVENTION

### Problem to be Solved by the Invention

The present invention is made by taking the above point into consideration, and an object of the present invention is to provide a seal ring which can improve an assembling property in relation to a chain and a stability of an installed state, and can stabilize a sealing performance.

### Means for Solving the Problem

According to the present invention, the above object is solved with a chain having the features of claim 1.

In the chain according to the present invention having the structure mentioned above, five protruding pieces constructed by the first outer peripheral lip, the second outer peripheral lip, the first end surface lip, the second end surface lip and the inner peripheral projection are provided radially from the annular base portion, the first outer peripheral lip among them is provided diagonally so as to be directed to the outer side in the diametrical direction and the
one side in the axial direction from the annular base portion, and the second peripheral lip is provided diagonally so as to be directed to the outer side in the diametrical direction and the other side in the axial direction from the annular base portion. Further, the seal lip is diagonally twisted by the generation of the rotation moment on the basis of the contact of the inner peripheral projection with the bush when the bush is pressed into the inner peripheral side of the seal ring, and the first outer peripheral lip and the second outer peripheral lip come into contact with the outer link plate or the inner link plate in a state in which the first outer peripheral lip and the second outer peripheral lip collapse into the outer side in the diametrical direction. Therefore, since the first outer peripheral lip and the second outer peripheral lip which are provided diagonally outward come into contact with the outer link plate or the inner link plate in the state in which the first outer peripheral lip and the second outer peripheral lip collapse into the outer side in the diametrical direction, it is possible to effectively inhibit the foreign matter such as the muddy water and the dust from entering into from the external portion.

Further, in the chain according to the present invention, the inner peripheral projection is provided so as to be directed to the inner side in the diametrical direction from the annular base portion and has the round surface having the circular arc-shaped cross section in its inward end, and is structured such as to achieve a function of diagonally twisting the seal ring by generating the rotation moment on the basis of the contact of the inner peripheral projection with the bush. The inner peripheral projection achieving the function mentioned above is arranged in an outer peripheral side of an end portion of the bush in place of a gap between the bush and the outer link plate, in a state in which the seal ring is diagonally twisted after achieving the function. Therefore, in the seal ring according to the present invention, since the inner peripheral projection arranged in the outer peripheral side of the end portion of the bush in the installed state is provided at an innermost position in the diametrical direction in a cross section of the seal ring, it is possible to effectively inhibit the lip (the first end surface lip or the second end surface lip) which is arranged further in the outer peripheral side from being bitten into the gap between the bush and the outer link plate.

Since the inner peripheral projection achieves the function mentioned above, the width in the axial direction thereof is set to be smaller than the distance between the outer link plate and the inner link plate. However, in the light of an installing property, the width in the axial direction of the inner peripheral projection is preferably equal to or more than 60 % in relation to the distance between the plates. Therefore, a rigidity of the inner peripheral projection is maintained and the inner peripheral projection escapes to the outer peripheral side of the bush when the bush is pressed into, by setting the width in the axial direction of the inner peripheral projection to be equal to or more than 60 % and less than 100 % in relation to the distance between the plates. Accordingly, it is possible to inhibit the inner peripheral projection from being bitten into the gap between the bush and the outer link plate.

### Effect of the Invention

The present invention achieves the following effects.

More specifically, in the present invention, the first outer peripheral lip is provided diagonally so as to be directed to the outer side in the diametrical direction and the one side in the axial direction from the annular base portion, the second outer peripheral lip is provided diagonally so as to be directed to the outer side in the diametrical direction and the other side in the axial direction from the annular base portion, and the first outer peripheral lip and the second outer peripheral lip which are provided diagonally outward as mentioned above come into contact with the outer link plate or the inner link plate in the state in which the first outer peripheral lip and the second outer peripheral lip collapse into the outer side in the diametrical direction, as mentioned above. Therefore, it is possible to effectively inhibit the foreign matter such as the muddy water and the dust from entering into from the external portion.

Further, the inner peripheral projection is provided so as to be directed to the inner side in the diametrical direction from the annular base portion and is provided with the round surface having the circular arc-shaped cross section in the inward end, the inner peripheral projection achieves the function of diagonally twisting the seal ring by generating the rotation moment on the basis of the contact of the inner peripheral projection with the bush, and the inner peripheral projection achieving the function mentioned above is provided in the innermost position in the diametrical direction in the cross section of the seal ring. Therefore, it is possible to effectively inhibit the lip which is arranged further in the outer peripheral side from being bitten into the gap between the bush and the outer link plate.

Therefore, on the basis of the structures mentioned above, there can be provided the seal ring which can stabilize the sealing performance as well as improving the assembling property in relation to the chain and the stability of the installed state.

### BRIEF EXPLANATION OF THE DRAWINGS

Fig. 1 is a cross sectional view of a seal ring according to an embodiment of the present invention;
Fig. 2 is a cross sectional view showing a state at the time of starting a work for installing the seal ring to a chain;
Fig. 3 is a cross sectional view showing a state at the time of finishing the work;
Fig. 4 is an explanatory view showing a general structure of the chain;
Figs. 5A and 5B are views showing a seal ring according to the prior art, in which Fig. 5A is a cross sectional view of the same, and Fig. 5B is a cross sectional view of a state at the time of starting a work for installing the seal ring to a chain;
Fig. 6 is a cross sectional view showing a state at the time of starting a work for installing a seal ring according to the other prior art to a chain; and
Figs. 7A and 7B are views showing the seal ring, in which Fig. 7A is a cross sectional view showing a state at the time of finishing the work for installing the seal ring to the chain, and Fig. 7B is a cross sectional view showing a state at the time of generating any problem.

### DETAILED DESCRIPTION OF PREFERRED EMBODIMENTS

The following embodiments are included in the present invention.
(1) A seal ring having a shape in which a circular projection is connected to an inner peripheral side of an X character outside shape in a cross sectional shape.
(2) A seal ring having a shape in which a circular projection is connected to an inner peripheral side in an X character outside shape in a cross sectional shape.
(3) The seal ring described in the item (1) or (2) mentioned above, wherein a width in an axial direction (a diameter) of the circular projection is equal to or more than 60 % and less than 100 % in relation to a distance between an outer link plate and an inner link plate.
(4) A leading end R of a seal lip is preferably between R0.1 and 0.3 in the light of a sealing performance or a forming property.
(5) Since the circular projection is provided in an inner peripheral side, the seal ring is not bitten into the bush, but is compressed to a link plate. Further, since the outer side of the circular projection is constructed by the X character shaped lip, two lips tilting to the outer peripheral side and two lips tilting to the inner peripheral side come into contact with the link plate while keeping the tilted states even after compression. As a result, it is possible to prevent the dust from entering into from the external portion in the outer peripheral side lip, and the grease in the inner portion is sealed by the inner peripheral side lip. Further, since the circular projection comes into contact with the bush, the seal is achieved at five points, the number of contact points is increased in comparison with the conventional X ring, and the sealing performance is improved.

### Embodiment

Next, a description will be given of an embodiment according to the present invention with reference to the accompanying drawings.

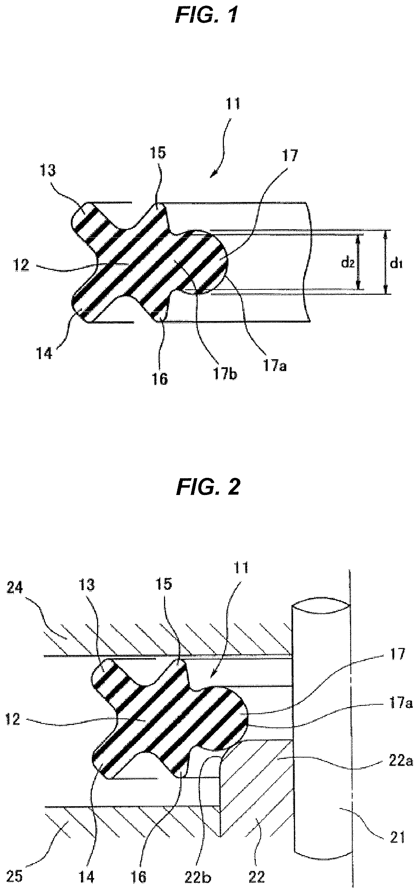

Fig. 1 shows a seal ring 11 according to an embodiment of the present invention. The seal ring 11 according to the embodiment is installed, for example, to the chain shown in Fig. 4. More specifically, the seal ring 11 is installed between an outer link plate 24 which is arranged in an outer peripheral side of a connection pin 21 and an inner link plate 25 which is arranged in the outer peripheral side of the connection pin 21 via a bush 22 in a state in which the seal ring 11 is compressed in an axial direction. An end portion 22a of the bush 22 protrudes out of the inner link plate 25 and extends toward the outer link plate 24, and the seal ring 11 is installed to an outer peripheral side of the end portion 22a of the bush 22.

The seal ring 11 is formed into an annular shape by a predetermined rubber material. Since the rubber material comes into contact with the grease, NBR, H-NBR and FKM are preferable, and the rubber material is appropriately selected according to a temperature condition.

The seal ring 11 has an annular base portion 12, a first outer peripheral lip 13 and a second outer peripheral lip 14 are integrally formed in an outer peripheral portion of the annular base portion 12, a first end surface lip 15 and a second end surface lip 16 are integrally formed in an end portion in an axial direction of the annular base portion 12, and an annular inner peripheral projection 17 is integrally formed in an inner peripheral portion of the annular base portion 12.

Among them, the first outer peripheral lip 13 is provided diagonally so as to be directed to an outer side in a diametrical direction (a leftward direction in the drawing) and one side in an axial direction (an upward direction in the drawing) from the annular base portion 12, and comes into close contact with the outer link plate 24 in a state in which the first outer peripheral lip 13 collapses into the outer side in the diametrical direction in an installed state as shown in Figs. 2 and 3.

The second outer peripheral lip 14 is provided diagonally so as to be directed to the outer side in the diametrical direction and the other side in the axial direction (a downward direction in the drawing) from the annular base portion 12, and comes into close contact with the inner link plate 25 in a state in which the second outer peripheral lip 14 collapses into the outer side in the diametrical direction in an installed state as shown in Figs. 2 and 3.

The first end surface lip 15 is provided so as to be directed to the one side in the axial direction from the annular base portion 12, and comes into close contact with the outer link plate 24 in a state in which the first end surface lip 15 collapses into an inner side in the diametrical direction (a rightward direction in the drawing) in an installed state as shown in Figs. 2 and 3.

The second end surface lip 16 is provided so as to be directed to the other side in the axial direction from the annular base portion 12, and comes into close contact with the inner link plate 25 in a state in which the second end surface lip 16 collapses into the inner side in the diametrical direction in an installed state as shown in Figs. 2 and 3.

The inner peripheral projection 17 is provided so as to be directed to the inner side in the diametrical direction from the annular base portion 12, and achieves a function of diagonally twisting the seal ring 11 by generation of rotation moment in the seal ring 11 on the basis of contact with the bush 22 when the bush 22 is pressed into the inner periphery of the seal ring 11.

As a result, a round surface 17a having a circular arc-shaped cross section is provided in a leading end portion (an inward end in a diametrical direction) of the inner peripheral projection 17 over an annular range of 180 degrees, or 180 degrees and more. In correspondence to the round surface 17a, a round surface 22b having a circular arc-shaped cross section is provided in an outer peripheral edge portion of the end portion 22a of the bush 22 over an angular range of 90 degrees.

Further, in order to achieve the function mentioned above, an inner diameter of the inner peripheral projection 17 is set to be smaller than an outer diameter of the bush 22, and a width d1 in an axial direction of the inner peripheral projection 17 is set to a dimension which is equal to or more than 60 % and less than 100 % in relation to a distance D (refer to Fig. 3) between the outer link plate 24 and the inner link plate 25.

The inner peripheral projection 17 comes into close contact with the bush 22 and the outer link plate 24 in the installed state as shown in Figs. 2 and 3.

The seal ring 11 having the structure mentioned above is used for sealing the chain as mentioned above, and is characterized in that the following operations and effects can be achieved by the structure mentioned above.

More specifically, in the seal ring 11 having the structure mentioned above, the first outer peripheral lip 13 is provided diagonally so as to be directed to the outer side in the diametrical direction and the one side in the axial direction from the annular base portion 12, the second outer peripheral lip 14 is provided diagonally so as to be directed to the outer side in the diametrical direction and the other side in the axial direction from the annular base portion 12, and the first outer peripheral lip 13 and the second outer peripheral lip 14 which are provided diagonally outward as mentioned above come into contact with the outer link plate 24 or the inner link plate 25 in the state in which the first outer peripheral lip 13 and the second outer peripheral lip 14 collapse into the outer side in the diametrical direction, as mentioned above. Therefore, it is possible to effectively inhibit the foreign matter such as the muddy water and the dust from entering into from the external portion.

Further, the first end surface lip 15 is provided so as to be directed to the one side in the axial direction from the annular base portion 12, the second end surface lip 16 is provided so as to be directed to the other side in the axial direction from the annular base portion 12, and the first end surface lip 15 and the second end surface lip 16 come into close contact with the outer link plate 24 or the inner link plate 25 in the state in which the first end surface lip 15 and the second end surface lip 16 collapse into the inner side in the diametrical direction. Therefore, it is possible to effectively inhibit the grease filled between the connection pin 21 and the bush 22 from leaking.

Further, the inner peripheral projection 17 comes into close contact with the bush 22 and the outer link plate 24. As a result, it is possible to effectively inhibit the grease from leaking.

Further, the inner peripheral projection 17 is provided so as to be directed to the inner side in the diametrical direction from the annular base portion 12 and is provided with the round surface 17a having the circular arc-shaped cross section in the inward end, the inner peripheral projection 17 achieves the function of diagonally twisting the seal ring 11 by generating the rotation moment on the basis of the contact of the inner peripheral projection 17 with the bush 22, and the inner peripheral projection 17 achieving the function mentioned above is provided in the innermost position in the diametrical direction in the cross section of the seal ring. Therefore, it is possible to effectively inhibit the lip (the first end surface lip 15 or the second end surface lip 16) which is arranged further in the outer peripheral side from being bitten into the gap between the bush 22 and the outer link plate 24.

Therefore, on the basis of the structures mentioned above, it is possible to stabilize the sealing performance against the external foreign matter and the internal grease as well as improving the assembling property in relation to the chain and the stability of the installed state.

In the embodiment mentioned above, the inner peripheral projection 17 is formed as a whole into the approximately circular cross section, by setting a width d₂ in the axial direction of a neck portion (a connection portion to the annular base portion 12) smaller than a maximum width d₁ in the axial direction of the inner peripheral projection 17 (d₂ < d₁), however, the dimensional relationship may be changed to d₂ = d₁. This case having the dimensional relationship d₂ = d₁ corresponds to a case that the round surface 17a having the circular arc-shaped cross section is provided in the leading end portion (the inward end in the diametrical direction) of the inner peripheral projection 17 over the angular range of 180 degrees. In this case, the inner peripheral projection 17 is formed as a whole into an approximately D character shaped cross section.

### Description of Reference Numerals

11 seal ring
12 annular base portion
13 first outer peripheral lip
14 second outer peripheral lip
15 first end surface lip
16 second end surface lip
17 inner peripheral projection
17a round surface
17b neck portion
21 connection pin
22 bush
22a bush end portion
24 outer link plate
25 inner link plate

## Claims

1. A chain comprising a seal ring (11) for sealing the chain, wherein the seal ring (11) is installed between
an outer link plate (24) which is arranged in an outer peripheral side of a connection pin (21),
an inner link plate (25) which is arranged in the outer peripheral side of said connection pin (21) via a bush (22), and
said bush (22) in a state of being compressed in an axial direction,
the seal ring (11) comprising:
an annular base portion (12); and
an inner peripheral projection (17) which is provided so as to be directed to an inner side in the diametrical direction and has a round surface (17a) having a circular arc-shaped cross section in an inward end,
wherein said seal ring (11) is adapted to be diagonally twisted by generation of rotation moment on the basis of contact of said inner peripheral projection (17) with said bush (22) when said bush (22) is pressed into an inner peripheral side of said seal ring (11), and
the inner peripheral projection (17) is arranged in an outer peripheral side of an end portion of the bush (22) in place of a gap between the bush (22) and the outer link plate (24) in a state in which the seal ring (11) is diagonally twisted, wherein
a first outer peripheral lip (13) which is provided diagonally so as to be directed to an outer side in a diametrical direction and one side in an axial direction from said annular base portion (12);
a second outer peripheral lip (14) which is provided diagonally so as to be directed to the outer side in the diametrical direction and the other side in the axial direction from said annular base portion (12);
a first end surface lip (15) which is provided so as to be directed to one side in the axial direction from said annular base portion (12); and
a second end surface lip (16) which is provided so as to be directed to the other side in the axial direction from said annular base portion (12); wherein said seal ring (11), wherein
said first outer peripheral lip (13) and the second outer peripheral lip (14) are adapted to come into contact with said outer link plate (24) or the inner link plate (25) in a state in which the first outer peripheral lip (13) and the second outer peripheral lip (14) collapse into an outer side in the diametrical direction, **characterized in that**
the inner peripheral projection (17) is formed as a whole into the approximately circular cross section, by setting a width (d₂) in the axial direction of a neck portion, which is a connection portion to the annular base portion (12), smaller than a maximum width (d₁) in the axial direction of the inner peripheral projection (17).

2. The chain according to claim 1, wherein a width in the axial direction of said inner peripheral projection (17) is equal to or more than 60 % and less than 100 % in relation to a distance between said outer link plate (24) and the inner link plate (25).

## Patentansprüche

1. Kette mit einem Dichtring (11) zum Abdichten der Kette, wobei der Dichtring (11) in einem Zustand, in dem er in einer Axialrichtung zusammengepresst ist, zwischen
einer äußeren Verbindungslasche (24), welche auf einer Außenumfangsseite eines Verbindungsbolzens (21) angeordnet ist,
einer inneren Verbindungslasche (25), welche über eine Hülse (22) auf der Außenumfangsseite des Verbindungsbolzens (21) angeordnet ist, und
der Hülse (22) eingebaut ist,
wobei der Dichtring (11)
einen ringförmigen Basisabschnitt (12); und
einen Innenumfangsvorsprung (17) umfasst, welcher vorgesehen ist, um in der diametralen Richtung auf eine Innenseite gerichtet zu sein, und an einem innenliegenden Ende eine runde Oberfläche (17a) mit einem kreisbogenförmigen Querschnitt hat,
wobei der Dichtring (11) angepasst ist, durch eine Erzeugung eines Drehmoments auf der Basis eines Kontakts des Innenumfangsvorsprungs (17) mit der Hülse (22) diagonal verwunden zu sein, wenn die Hülse (22) in eine Innenumfangsseite des Dichtrings (11) gepresst ist, und
der Innenumfangsvorsprung (17) in einem Zustand, in welchem der Dichtring (11) diagonal verwunden ist, auf einer Außenumfangsseite eines Endabschnitts der Hülse (22) an der Stelle eines Spalts zwischen der Hülse (22) und der äußeren Verbindungslasche (24) angeordnet ist, wobei
eine erste Außenumfangslippe (13) diagonal vorgesehen ist, um von dem ringförmigen Basisabschnitt (12) in einer diametralen Richtung auf eine Außenseite und in einer Axialrichtung auf eine Seite gerichtet zu sein;
eine zweite Außenumfangslippe (14) diagonal vorgesehen ist, um von dem ringförmigen Basisabschnitt (12) in der diametralen Richtung auf die Außenseite und in der Axialrichtung auf die andere Seite gerichtet zu sein;
eine erste Endoberflächenlippe (15) vorgesehen ist, um von dem ringförmigen Basisabschnitt (12) in der Axialrichtung auf eine Seite gerichtet zu sein; und
eine zweite Endoberflächenlippe (16) vorgesehen ist, um von dem ringförmigen Basisabschnitt (12) in der Axialrichtung auf die andere Seite gerichtet zu sein;
wobei bei dem Dichtring (11)
die erste Außenumfangslippe (13) und die zweite Außenumfangslippe (14) angepasst sind, in einem Zustand, in welchem die erste Außenumfangslippe (13) und die zweite Außenumfangslippe (14) in der diametralen Richtung zu einer Außenseite eingeklappt sind, mit der äußeren Verbindungslasche (24) oder der inneren Verbindungslasche (25) in Kontakt zu kommen, **dadurch gekennzeichnet, dass**
der Innenumfangsvorsprung (17) insgesamt in dem näherungsweise kreisförmigen Querschnitt ausgebildet ist, indem eine Breite (d₂) in der Axialrichtung eines Verengungsabschnitts, welcher ein Verbindungsabschnitt zu dem ringförmigen Basisabschnitt (12) ist, kleiner als eine maximale Breite (d₁) in der Axialrichtung des Innenumfangsvorsprungs (17) festgelegt ist.

2. Kette nach Anspruch 1, wobei eine Breite in der Axialrichtung des Innenumfangsvorsprungs (17) in Bezug auf einen Abstand zwischen der äußeren Verbindungslasche (24) und der inneren Verbindungslasche (25) gleich oder mehr als 60% und weniger als 100% beträgt.

## Revendications

1. Chaîne comprenant une bague d'étanchéité (11) pour sceller la chaîne, dans laquelle la bague d'étanchéité (11) est installée entre :
une plaque de liaison externe (24) qui est agencée dans un côté périphérique externe d'une broche de raccordement (21),
une plaque de liaison interne (25) qui est agencée dans le côté périphérique externe de ladite broche de raccordement (21) via une douille (22), et
ladite douille (22) est dans un état dans lequel elle est comprimée dans une direction axiale,
la bague d'étanchéité (11) comprenant :
une partie de base annulaire (12) ; et
une saillie périphérique interne (17) qui est prévue afin d'être dirigée vers un côté interne dans la direction diamétrale et a une surface ronde (17a) ayant une section transversale en forme d'arc circulaire dans une extrémité interne,
dans laquelle ladite bague d'étanchéité (11) est adaptée pour être tordue, en diagonale, par la génération du moment de rotation sur la base du contact de ladite saillie périphérique interne (17) avec ladite douille (22), lorsque ladite douille (22) est comprimée dans un côté périphérique interne de ladite bague d'étanchéité (11), et
la saillie périphérique interne (17) est agencée dans un côté périphérique externe d'une partie d'extrémité de la douille (22), à la place d'un espace entre la douille (22) et la plaque de liaison externe (24) dans un état dans lequel la bague d'étanchéité (11) est tordue, en diagonale, dans laquelle :
une première lèvre périphérique externe (13) qui est prévue, en diagonale, afin d'être dirigée vers un côté externe dans une direction diamétrale et un côté dans une direction axiale à partir de ladite partie de base annulaire (12) ;
une seconde lèvre périphérique externe (14) qui est prévue, en diagonale, afin d'être dirigée vers le côté externe dans la direction diamétrale et l'autre côté dans la direction axiale à partir de ladite partie de base annulaire (12) ;
une première lèvre de surface d'extrémité (15) qui est prévue afin d'être dirigée vers un côté dans la direction axiale à partir de ladite partie de base annulaire (12) ; et
une seconde lèvre de surface d'extrémité (16) qui est prévue afin d'être dirigée vers l'autre côté dans la direction axiale à partir de ladite partie de base annulaire (12) ; dans laquelle à ladite bague d'étanchéité (11),
ladite première lèvre périphérique externe (13) et la seconde lèvre périphérique externe (14) sont adaptées pour venir en contact avec ladite plaque de liaison externe (24) ou la plaque de liaison interne (25) dans un état dans lequel la première lèvre périphérique externe (13) et la seconde lèvre périphérique externe (14) se plient dans un côté externe dans la direction diamétrale, **caractérisée en ce que** :
la saillie périphérique interne (17) est formée dans son ensemble, dans la section transversale approximativement circulaire, en déterminant une largeur (d₂) dans la direction axiale d'une partie de col, qui est une partie de raccordement à la partie de base annulaire (12), inférieure à une largeur maximum (d₁) dans la direction axiale de la saillie périphérique interne (17).

2. Chaîne selon la revendication 1, dans laquelle une largeur dans la direction axiale de ladite saillie périphérique interne (17) est égale ou supérieure à 60 % et inférieure à 100 % par rapport à une distance entre ladite plaque de liaison externe (24) et la plaque de liaison interne (25) .
